# EUROPEAN PATENT APPLICATION

(11) **EP 1 478 036 A2**
(43) Date of publication of application: **17.11.2004**
(21) Application number: 04252738.2
(22) Date of filing: 12.05.2004
(51) Int. Cl.: H01M 2/10, H01M 2/20

(54) **Electrochemical cell stack**

(30) Priority: 14.05.2003 JP 2003135770; 25.08.2003 JP 2003208540
(71) Applicant: Nec Tokin Corporation, Sendai-shi, Miyagi (JP)
(72) Inventor: Mitani, Masaya, Sendai-shi Miyagi (JP); Nobuta, Tomoki, Sendai-shi Miyagi (JP); Kamisuki, Hiroyuki, Sendai-shi Miyagi (JP); Yoshinari, Tesuya, Sendai-shi Miyagi (JP)
(74) Representative: W.P. THOMPSON & CO.

(57) **Abstract**

The present invention provides for an electrochemical cell stack formed of a plurality of electrochemical cell units each comprising a sheet separator; a pair of cathodic and anodic sheet electrodes impregnated with an electrolytic solution and disposed facing each other either side of the separator; a pair of cathodic and anodic current collectors disposed adjacent the pair of the cathodic and the anodic electrodes respectively; and a gasket surrounding the electrodes for the sealing thereof;
the stack including a sheet conductor located between the units thereof;
wherein the sheet conductor is arranged such that the outer dimension of its face contacting with a unit is disposed to almost overlap with the inner dimension of the gasket in the unit and which can advantageously provide a more reliable electrochemical cell stack.

## Description

This invention relates to an electrochemical cell stack in which electrochemical cells comprising a separator, electrodes, a current collector and a gasket are stacked in series.

An electric double layer capacitor or secondary battery generally comprises an electrochemical cell having a structure where a pair of cathode and anode are combined via a separator. Such electrochemical cells may be categorized into a smaller, so-called coin type and a rolled type which can have a relatively large capacity.

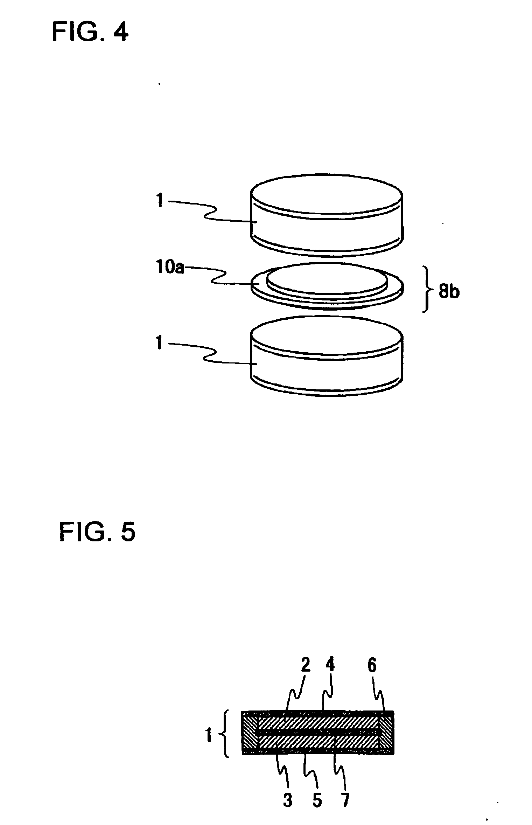

FIG. 5 shows a cross-sectional view of a unit for an electrochemical cell, which is a basic structural unit of a coin-type electric double layer capacitor. In this figure, "2" denotes a cathodic polarizable electrode; "3" denotes an anodic polarizable electrode; "4" denotes a cathodic current collector; "5" denotes an anodic current collector; "6" denotes an annular gasket; "7" denotes a separator.

As shown in FIG. 5, for an electric double layer capacitor, cathodic and an anodic polarizable electrodes 2,3 formed by molding, for example, carbonaceous material powder with a binder and cathodic and an anodic current collectors 4,5 made of a conductive sheet are sequentially laminated via a separator 7 made of a porous polymer sheet, and the cathodic and the anodic polarizable electrodes 2,3 are impregnated with an electrolytic solution. Then, the laminate is sealed with a gasket 6 made of, e.g., a rubbery material to form a unit 1.

Such a unit may be sometimes used as an electrochemical cell. Alternatively, for a desired output, a plurality of units may be electrically connected in series to be used as an electrochemical cell stack. For using a plurality of units as a stack, a contact resistance between units must be reduced, an internal resistance in a unit must be reduced and also fluctuation of an electrochemical reaction in an electrode among units must be minimized.

Japanese patent application laid-open publication No. 1994-215794 describes an example in which a plurality of units are used as a stack. This document discloses that difference in electrolytic solution reduction among units may be minimized to provide a thin gastight lead accumulator with an improved life. Specifically, neighboring units in the stack are stacked via a metal plate with a larger area than that of the stacked surface of the unit, and the stacked surface is pressed by a case containing the stack.

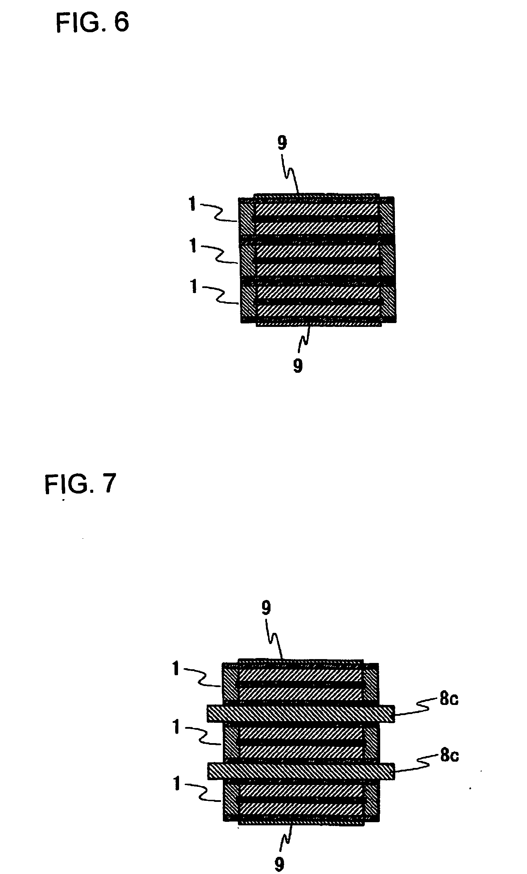

FIG. 7 is a schematic cross-sectional view illustrating an electrochemical cell stack according to the above-mentioned document. In this figure, "1" denotes a unit of the electrochemical cell; "8c" denotes a conductor; "9" denotes a pressure plate. As seen in FIG. 7, the conductor 8c has a larger area than the stacked surface of the unit 1.

As described in that known document, such a configuration permits a metal plate which corresponds to the conductor 8c in FIG. 7 to tightly adhere to a unit, and thus can minimize a difference in reduction of an electrolytic solution due to moisture permeation.

However, since in the technique disclosed in the above document, a metal intervening between units has a larger area than the stacked surface of the unit, a gasket will experience a pressure while an electrode is not sufficiently pressed. However, in the light of reducing an internal resistance of a unit and minimizing fluctuation of an electrochemical reaction in an electrode among units among the problems described above, an electrode may be sufficiently pressed to achieve even and sufficient contact between the electrode and the electrolytic solution, resulting in some improvement.

Thus, the technique known from the above document may be to some extent effective in minimizing fluctuation in reduction of an electrolytic solution contained in a unit, but may be substantially ineffective in reducing an internal resistance in a unit or minimizing fluctuation of an electrochemical reaction in an electrode among units.

A further document, Japanese patent application laid-open publication No. 1998-189056 discloses that in the centre of an electrode laminate contained in a cubic metal case, a pressure mat which can be filled with a fluid such as a gas is placed and an even pressure is applied to the whole area of all electrodes in the electrode laminate to keep an inter-electrode distance constant and thus to achieve an even electrochemical reaction. However, this technique involves pressing an electrode laminate from the insideof an electrochemical cell, and cannot be, therefore, applied to an electrochemical cell unit which is sealed by a gasket as shown in FIG. 5.

The invention seeks to provide for an electrochemical cell stack having advantages over known such stacks.

According to one aspect of the present invention, there is provided an electrochemical cell stack in which a plurality of electrochemical cell units comprising a sheet separator; a pair of a cathodic and an anodic sheet electrodes impregnated with an electrolytic solution which are placed facing each other via the separator; a pair of a cathodic and an anodic current collector which are placed via the pair of the cathodic and the anodic electrodes respectively; and a gasket surrounding the electrodes for sealing the pair of electrodes are stacked;
comprising a sheet conductor between the units of the stack; and
wherein the sheet conductor is placed such that the outer circumference of its face contacting with the unit is disposed to almost overlap with the inner circumference of the gasket in the unit.

According to another aspect there is provided an electrochemical cell stack in which a plurality of electrochemical cell unit comprising a sheet separator; a pair of a cathodic and an anodic sheet electrodes impregnated with an electrolytic solution which are placed facing to each other via the separator; a pair of a cathodic and an anodic current collector which are placed via the pair of the cathodic and the anodic electrodes respectively; and a gasket surrounding the electrodes for sealing the pair of electrodes are stacked;
comprising a sheet conductor between the units of the stack; and
wherein the sheet conductor has a planar shape where the outer circumference of its face contacting with the unit corresponds to the inner circumference of the gasket in the unit, and
the sheet conductor is placed such that the outer circumference is disposed inside of the inner circumference of the gasket in the unit.

The invention is advantageous in providing a more reliable electrochemical cell stack in which electrochemical cell units comprising a separator, electrodes, current collectors and a gasket are stacked.

The invention advantageously arises from a particular configuration in stacking electrochemical cell units.

Advantageously the gasket is annular and the sheet conductor has a circular planar shape corresponding to the inner circumference of the gasket.

Preferably the sheet conductor has a projection extending to the outer circumference of the gasket in the centre in the thickness direction.

Further, the electrochemical cell unit can comprise a cathode containing a proton-conducting compound as an electrode active material, an anode containing a proton-conducting compound as an electrode active material and an electrolyte containing a proton source.

Advantageously, the electrode and the current collector can be separately formed and laminated.

The invention can also provide for a storage device comprising an electrochemical cell such as that defined above.

As should be appreciated within the invention, the planar shape of the sheet conductor intervening between units corresponds to the inner circumference of the gasket, so that the sheet conductor can apply an even and adequate pressure to the electrodes in the unit. A first effect is that a contact resistance and its fluctuation among units are reduced, and an even voltage can be accordingly applied to each unit. Another effect is that even and sufficient contact between the electrode and the electrolytic solution or the current collector is produced, and hence an internal resistance in a unit can be reduced and that fluctuation in an electrochemical reaction among units can be minimized. Consequently, synergism of these effects can result in an electrochemical cell stack exhibiting good voltage balance and improved reliability.

Furthermore, a projection in a sheet conductor which extends to the outer circumference of a gasket can facilitate alignment during stacking a unit and a sheet conductor, resulting in an improved productivity.

The invention is described further hereinafter, by way of example only, with reference to the accompanying drawings in which:
FIG. 1 is a schematic cross-sectional view of an electrochemical cell stack according to an embodiment of the present invention;
FIG. 2 is a schematic cross-sectional view of an electrochemical cell stack according to another embodiment of the present invention;
FIG. 3 shows an embodiment of a conductor having a projection according to an embodiment of this invention;
FIG. 4 shows stacking of a conductor having a projection in an electrochemical cell stack embodying the present invention;
FIG. 5 is a cross-sectional view of an electrochemical cell unit as a basic structural unit for a coin-type electric double layer capacitor according to the prior art;
FIG. 6 is a cross-sectional view of an example of a conventional electrochemical cell stack without a conductor; and
FIG. 7 is a cross-sectional view schematically illustrating an example of a convention electrochemical cell stack as known from Japanese patent application No. 1994-215794.

An electrochemical cell unit used in this invention may in principle have a conventional structure, which will be described with reference to FIG. 5. The unit 1 shown in FIG. 5 consists of a cathode 2 consisting of a cathodic electrode active material, a conduction auxiliary and a binder; an anode 3 consisting of an anodic electrode active material, a conduction auxiliary and a binder; an ion-permeable and insulative separator 7 disposed between the cathode 2 and the anode 3; a cathodic current collector 4 and an anodic current collector 5 disposed on the upper and the lower surface in FIG. 5, respectively; and a gasket 6 surrounding these electrodes and the separator. Considering volume variation in the electrode associated with a reaction, the electrode and the current collector may be separately formed and laminated.

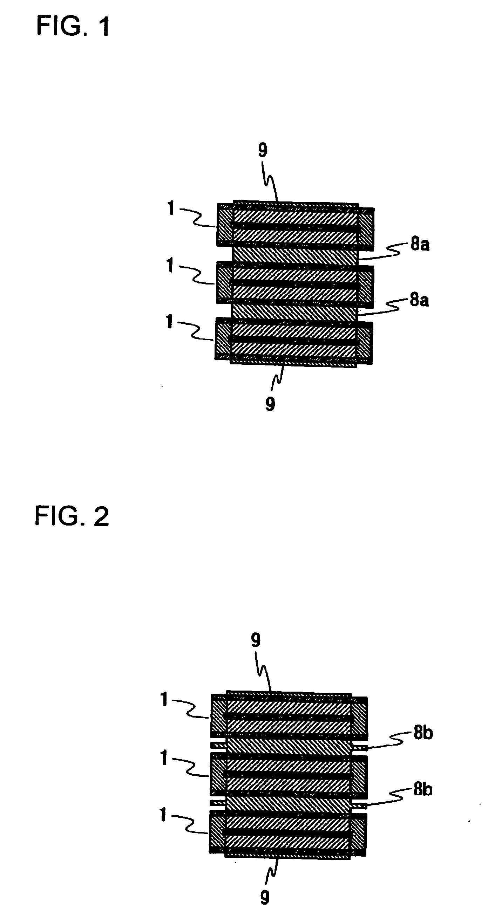

FIG. 1 is a schematic cross-sectional view of an embodiment of an electrochemical cell stack according to this invention. As seen in FIG. 1, a plurality of units 1 are stacked via conductors 8a and pressure plates 9 are disposed on both ends in the stacking direction. The conductor intervening between the units may be made of a conducting material such as a metal plate and a graphite sheet such as a grafoil. As seen in FIG. 1, the outer circumference of the conductor 8a has a shape corresponding to the inner circumference of the gasket 6, typically has the identical shape, and the conductor is contacted only with an area in the current collector where the cathode and the anode are disposed. The electrodes can be, therefore, evenly and adequately pressed by a pressure from the pressure plate 9. From a similar point of view, it is preferable that the pressure plates 9 disposed on both ends of the stack also has an outer circumference shape corresponding to, typically identical to the inner circumference of the gasket 6.

It is preferable that the conductor or the pressure plate has an area of the face contacting with the unit equal to or less than that of inside region of the inner circumference of the gasket of the unit in a stacked plane thereof. Their area of the face contacting with the unit is preferably 90 % or more to the area of inner circumference of the gasket, more preferably 95 % or more.

When the gasket is annular, the conductor or the pressure plate may be a circular plate having an outer diameter equal to or less than the inner diameter of the gasket. The outer diameter of the circular plate is substantially equal to the outer diameter of the electrode disposed inside of the gasket for pressing the whole electrode-disposing area.

The annular gasket and the circular plate may be disposed such that their centers are aligned on the same axis.

FIG. 2 is a schematic cross-sectional view of another embodiment of an electrochemical cell stack according to this invention. In this embodiment, a conductor 8b has a projection in the center in the thickness direction which extends to the outer circumference of the gasket. Such a projection formed in the conductor can significantly facilitate alignment of the unit with the conductor to improve a working efficiency in assembling.

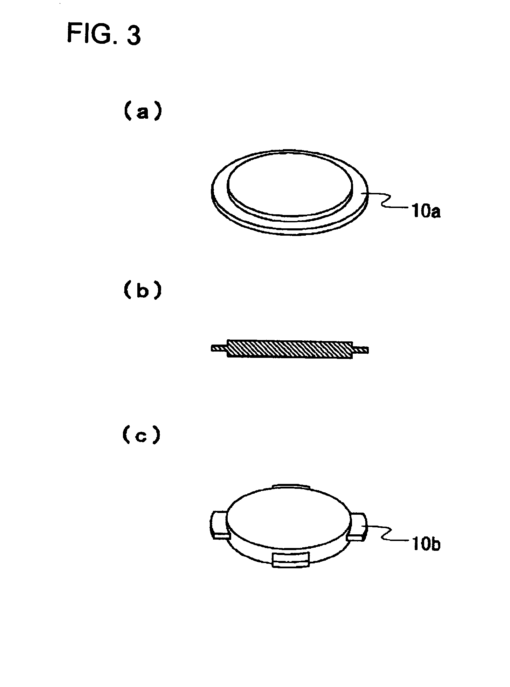

FIG. 3 shows an embodiment of a conductor having a projection; FiGs. 3(a) and 3(c) are perspective views and FIG. 3(b) is a cross-sectional view. In FIG. 3, "10a" denotes a projection formed in the whole outer circumference of the conductor and "10b" denotes a projection formed partially in the outer circumference of the conductor. As described above, the projection is used for alignment during assembling. It can be, therefore, formed in the whole outer circumference of the conductor as illustrated in FIG. 3(a) or partially in the outer circumference of the conductor as illustrated in FIG. 3(c).

FIG. 4 shows stack of a unit 1 and a conductor 8b using a projection 10a in the conductor. Since the unit 1 and the projection 10a in the conductor 8a have outer shapes with a substantially equal outer diameter as shown in FIG. 4, an alignment member (not shown) contacting at least at three points in the outer circumference may be used to facilitate alignment.

The effects according to the present invention may be more prominently achieved by an electrochemical cell which is operable such that as a charge carrier, protons are exclusively involved in a redox reaction associated with charge/discharge in both electrodes. More specifically, preferred is an electrochemical cell comprising an electrolytic solution containing a proton source, where a proton concentration in the electrolyte and an operating voltage are controlled to allow the cell to operate such that bonding/elimination of a proton in the electrode active material may be exclusively involved in electron transfer in a redox reaction in both electrodes associated with charge/discharge.

The following reaction equation shows a reaction of polyindole as one of proton-conducting compounds. The first step shows a doping reaction, where X⁻ represents a dopant ion such as sulfonate and halide ions, which can dope a proton-conducting compound to endow the compound with electrochemical activity. The second step shows an electrochemical reaction (electrode reaction) involving bonding/elimination of a proton in a doped compound. In an electrochemical cell in which such an electrode reaction occurs, bonding/elimination of a proton is exclusively involved in electron transfer in a redox reaction, so that only protons are transferred during charge/discharge. Consequently, it results in reduced volume variation in the electrode associated with a reaction and better cycle properties. Furthermore, a higher proton-transfer rate can accelerate a reaction, resulting in improved high-rate properties, i. e., improved high-speed charge/discharge properties.

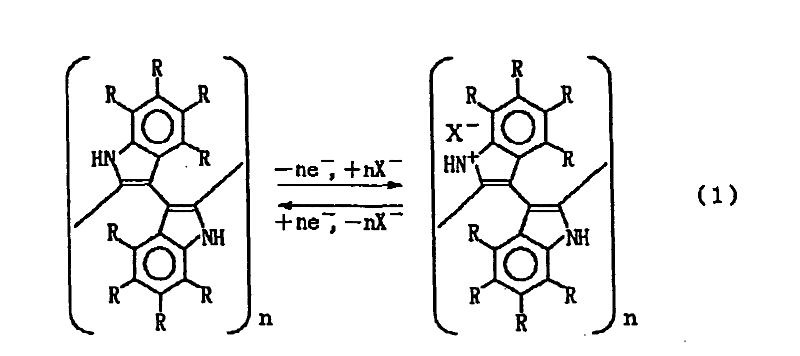

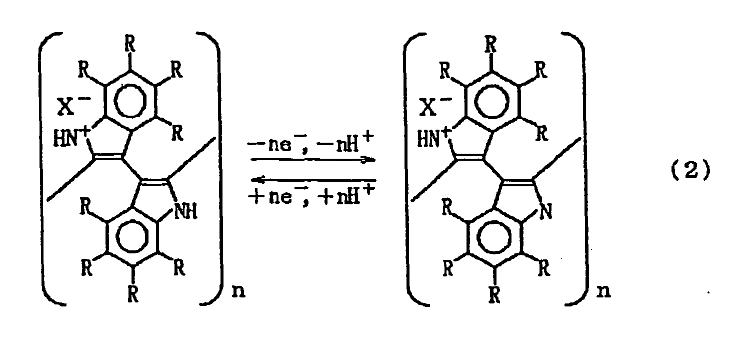

As described above, an electrode active material in this invention is a proton-conducting compound, which is an organic compound (including a polymer) capable of storing electrochemical energy by a reaction with ions of an electrolyte.

Such a proton-conducting compound may be any of known compound conventionally used; for example, π-conjugated polymers such as polyaniline, polythiophene, polypyrrole, polyacetylene, poly-p-phenylene, polyphenylene-vinylene, polyperinaphthalene, polyfuran, polyflurane, polythienylene, polypyridinediyl, polyisothianaphthene, polyquinoxaline, polypyridine, polypyrimidine, polyindole, polyaminoanthraquinone, polyimidazole and their derivatives; indole π-conjugated compound such as an indole trimer compound; quinones such as benzoquinone, naphthoquinone and anthraquinone; quinone polymers such as polyanthraquinone, polynaphthoquinone and polybenzoquinone where a quinone oxygen can be converted into a hydroxyl group by conjugation; and proton-conducting polymer prepared by copolymerizing two or more of the monomers giving the above polymers. These compounds may be doped to form a redox pair for exhibiting conductivity. These compounds are appropriately selected as a cathode active material and an anode active material, taking a redox potential difference into account.

Preferable examples of a proton-conducting compound include π-conjugated compounds or polymers having a nitrogen atom, quinone compounds and quinone polymers.

A proton source in the proton-source-containing (proton donating) electrolyte may be an inorganic or organic acid. Examples of an inorganic acid include sulfuric acid, nitric acid, hydrochloric acid, phosphoric acid, tetrafluoroboric acid, hexafluorophosphoric acid and hexafluorosilicic acid. Examples of an organic acid include saturated monocarboxylic acids, aliphatic carboxylic acids, oxycarboxylic acids, p-toluenesulfonic acid, polyvinylsulfonic acid and lauric acid. Among these proton-source-containing electrolytes, an aqueous acid-containing solution is preferable and an aqueous solution of sulfuric acid is more preferable.

A proton concentration in an electrolytic solution containing a proton source is preferably 10⁻³ mol/L or more, more preferably 10⁻¹ mol/L or more in the light of reactivity of the electrode materials while being preferably 18 mol/L or less, more preferably 7 mol/L or less in the light of prevention of deterioration in activity of the electrode materials and dissolution of the electrode materials.

### EXAMPLES

This invention will be further detailed with reference to specific examples. Since an electrochemical cell unit may have in principle a conventional structure, a unit configuration will be described with reference to FIG. 5.

### Example 1

To a polyindole consisting of the unit represented by the following formula as a cathodic electrode active material were added vapor-grown carbon as a conduction auxiliary in 20 wt% to the electrode active material and a polyvinylidene fluoride with an average molecular weight of 1,100 in 8 wt% to the electrode active material, and the mixture was stirred using a blender. The resulting mixture was hot-pressed to form a cathode 2 (outside diameter: 13.2 mm).

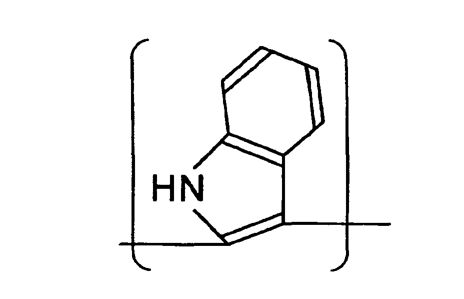

Separately, to a polyphenylquinoxaline represented by the following formula as an anodic electrode active material were added vapor-grown carbon as a conduction auxiliary in 25 wt% to the electrode active material and the mixture was stirred using a blender. The resulting mixture was hot-pressed to form an anode 3 (outside diameter: 13.2 mm).

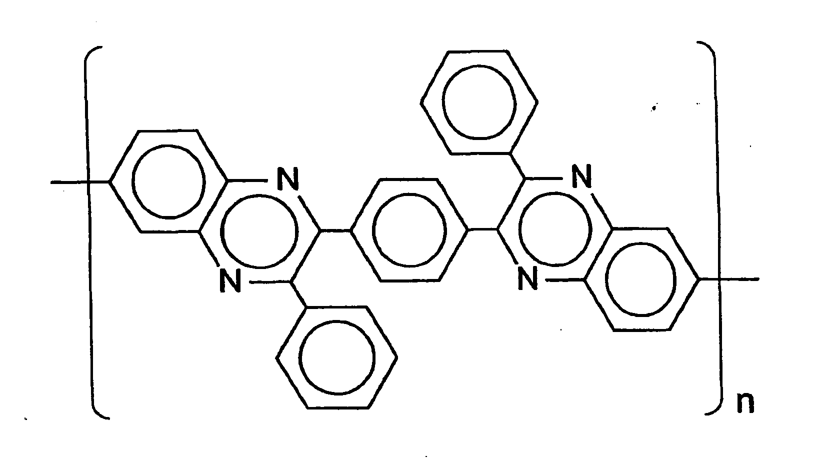

The cathode and the anode were impregnated with an electrolytic solution. The electrolytic solution was a 20 wt% aqueous solution of sulfuric acid. The cathode and the anode were laminated via porous polypropylene with a thickness of 150 µm as a separator.

Then, the resulting laminate was combined with a cathodic and an anodic current collectors 4,5 made of a conductive rubber and a gasket 6 made of a rubbery material, and the current collectors and the annular gasket (outside diameter: 16.2 mm, inside diameter: 14.2 mm) were glued by vulcanization to prepare an electrochemical cell unit 1. Although vulcanization gluing was used in this example, this invention is not limited to the specific method as long as stable adhesion can be achieved.

Six units 1 were stacked via alternate circular stainless plates (outside diameter: 14.0 mm) with a thickness of 200 µm and having a planar shape substantially matching with the shape of the inner circumference in the gasket. Then, a circular pressure plate was disposed on each surface of the stack to provide an electrochemical cell stack having a cross section as shown in FIG. 1 except the number of the stacked units.

### Example 2

An electrochemical cell stack was prepared as described in Example 1, except using a stainless plate with a thickness of 100 µm as a conductor.

### Example 3

An electrochemical cell stack was prepared as described in Example 1, except using a conductor with a thickness of 200 µm having a projection in the center in the thickness direction. The cross-sectional shape of the electrochemical cell stack was as described in FIG. 2 except the number of the stacked units.

### Example 4

An electrochemical cell stack was prepared as described in Example 1, except that the number of the stacked units 1 was three.

### Comparative Example 1

An electrochemical cell stack was prepared as described in Example 1, except that no intervening conductors were used. The cross-sectional shape of the electrochemical cell stack was as described in FIG. 6 except the number of the stacked units.

### Comparative Example 2

An electrochemical cell stack was prepared as described in Comparative Example 1, except that the number of the units was three.

### Comparative Example 3

An electrochemical cell stack was prepared as described in Example 1, except that six units were stacked via alternate stainless plate conductor with a thickness of 200 µm. The cross-sectional shape of the electrochemical cell stack was as described in FIG. 7 except the number of the stacked units. That is, the electrochemical cell stack corresponds to the stack described in Patent Reference 1.

The electrochemical cell stacks described above were evaluated by a constant-voltage application test at 45 °C. An evaluation measure was an equivalent series resistance (hereinafter, referred to as "ESR"). Table 1 summarizes the results. The values in Table 1 are relative values calculated assuming that an ESR before conducting the constant-voltage application test in Comparative Example 1 is "100".

**Table 1**

| | | Unit No. | Conductor thickness (µm) | ESR | |
|---|---|---|---|---|---|
| | | | | Before testing | After testing |
| Example | 1 | 6 | 200 | 95 | 98 |
| | 2 | 6 | 100 | 93 | 96 |
| | 3 | 6 | 200 | 90 | 85 |
| | 4 | 3 | 200 | 51 | 49 |
| Comp. Example | 1 | 6 | - | 100 | 258 |
| | 2 | 3 | - | 53 | 90 |
| | 3 | 6 | 200 | 108 | 152 |

The results in Table 1 show that ESR fluctuation before and after a constant-voltage application test in any of the electrochemical cell stacks in Examples 1 to 4 is significantly reduced than that in Comparative Example 1. It thus suggests that irrespective of a thickness, presence of a projection or the number of stacked units, the use of intervening conductors may contribute minimizing fluctuation in a contact resistance and equalization of an applied voltage.

In contrast, variation rates of an ESR before and after a constant-voltage application test in Comparative Examples 1 and 2 were about 2.6 and about 1.7 folds, respectively. It suggests that fluctuation in a contact resistance among units may deteriorate balance in a voltage applied to each unit, leading to increase in ESR variation. The smaller variation rate in Comparative Example 2 may be because the number of the stacked units was smaller so that fluctuation in a contact resistance among units was less influential.

In Comparative Example 3, an ESR variation rate was larger than Examples, although the intervening conductors were used. It may be because the conductor had an outer diameter larger than that of the gasket so that a pressure was received by the gasket and thus an adequate pressure was not applied to a desired electrode area.

In the above description, this invention has been described, taking a secondary battery as an example, but this invention would be similarly effective when being applied to another type of storage device such as an electric double layer capacitor.

## Claims

1. An electrochemical cell stack formed of a plurality of electrochemical cell units each comprising a sheet separator; a pair of cathodic and anodic sheet electrodes impregnated with an electrolytic solution and disposed facing each other either side of the separator; a pair of cathodic and anodic current collectors disposed adjacent the pair of the cathodic and the anodic electrodes respectively; and a gasket surrounding the electrodes for the sealing thereof;
the stack including a sheet conductor located between the units thereof;
wherein the sheet conductor is arranged such that the outer dimension of its face contacting with a unit is disposed to almost overlap with the inner dimension of the gasket in the unit.

2. An electrochemical cell stack formed of a plurality of electrochemical cell units each comprising a sheet separator; a pair of cathodic and anodic sheet electrodes impregnated with an electrolytic solution and disposed facing each other either side of the separator; a pair of cathodic and anodic current collectors disposed adjacent the pair of the cathodic and the anodic electrodes respectively; and a gasket surrounding the electrodes for the sealing thereof;
the stack including a sheet conductor located between the units thereof;
wherein the sheet conductor has a planar shape and a face contacting with a unit wherein the outer circumference of the said face corresponds substantially to the inner circumference of the gasket in the unit, and
the sheet conductor is placed such that the said outer circumference is disposed inside of the inner circumference of the gasket in the unit.

3. An electrochemical cell stack as claimed in Claim 1 or 2, wherein the gasket is annular and the sheet conductor has a circular planar shape corresponding to the inner circumference of the gasket.

4. An electrochemical cell stack as claimed in Claim 1, 2 or 3 wherein the sheet conductor has at least one projection extending in the direction of the outer dimension of the gasket.

5. An electrochemical cell stack as claimed in Claim 1, 2, 3 or 4, wherein the electrochemical cell unit comprises a cathode containing a proton-conducting compound as an electrode active material, an anode containing a proton-conducting compound as an electrode active material and an electrolyte containing a proton source.

6. An electrochemical cell stack as claimed in Claim 1, 2, 3, 4 or 5, wherein the electrode and the current collector are separately formed and laminated.

7. A storage device comprising an electrochemical cell stack as claimed in any one or more of Claims 1 to 6.

8. A sheet conductor arranged for location between electrochemical cells of an electrochemical cell stack, the sheet conductor being substantially planar and having a face which up to its outer dimension is arranged to contact a cell and the conductor further including at least one alignment projection extending beyond the said outer dimension of the said face. 22
